# EUROPÄISCHE PATENTSCHRIFT

(11) **EP 4 077 953 B1**
(45) Veröffentlichungstag und Bekanntmachung des Hinweises auf die Patenterteilung: **06.11.2024**
(21) Anmeldenummer: 20820106.1
(22) Anmeldetag: 03.12.2020
(51) Int. Cl.: F16B 11/00, B23K 20/12

(54) **VERBINDUNGSELEMENT ZUM BEFESTIGEN AUF EINEM BAUTEIL DURCH REIBSCHWEISSEN**
CONNECTION ELEMENT FOR SECURING TO A COMPONENT VIA FRICTION WELDING
ÉLÉMENT DE RACCORDEMENT À FIXER SUR UN COMPOSANT PAR SOUDAGE PAR FRICTION

(30) Priorität: 19.12.2019 DE 102019135240
(43) Veröffentlichungstag der Anmeldung: 26.10.2022
(73) Patentinhaber: EJOT SE & Co. KG, 57319 Bad Berleburg (DE)
(72) Erfinder: KITTEL, Dieter, 57334 Bad Laasphe (DE); MÜLLER, Niko, 57319 Bad Berleburg (DE); ENGEL, Danni, 24558 Henstedt-Ulzburg (DE)
(74) Vertreter: DREISS Patentanwälte PartG mbB
(86) Internationale Anmeldenummer: PCT/EP2020/084435
(87) Internationale Veröffentlichungsnummer: WO 2021/122031

(56) Entgegenhaltungen:
- EP-A1- 0 337 813
- EP-A1- 3 259 093
- DE-U1- 202004 014 071

## Beschreibung

Die Erfindung betrifft ein Verbindungselement, insbesondere einen thermischen Stoffschlussdom, zum Befestigen an der Oberfläche eines Bauteils aus einem faserverstärkten Verbund-Werkstoff, wie zum Beispiel CFK oder GFK).

Solche Verbindungselemente werden benötigt, um beispielsweise auf gewichtsoptimierten Bauteilen aus CFK Anbauteile zu befestigen oder mit anderen Teilen zu verbinden. Bei Bauteilen aus Faserverbundwerkstoffen ist es in vielen Fällen unerwünscht oder sogar ausgeschlossen, das Bauteil zu durchbohren, um einen Niet oder eine Schraube durch das Bauteil zu führen und das Verbindungselement auf diese Weise bekannte und vielfach bewährte Weise mit dem Bauteil zu verbinden. Diese Restriktion geht auf die Tatsache zurück, dass jede Bohrung den Faserverlauf innerhalb des Bauteils aus einem faserverstärkten Verbund-Werkstoff (Verbund-Werkstoff-Bauteil) stört und dessen Belastbarkeit verringert. Darüber hinaus kann es durch unsachgemäßes Einbringen einer Bohrung zu einer Delamination kommen.

Um diese Nachteile zu vermeiden, hat man in der Vergangenheit solche Verbindungselemente auf die Oberfläche des CFK-Bauteils geklebt. Diese Befestigungstechnik hat jedoch verschiedene Nachteile. Nachteilig sind insbesondere die für eine automatisierte Serienfertigung lange Aushärtezeit des Klebstoffs und die Schwierigkeiten eine solche Klebverbindung prozesssicher herzustellen.

Aus der EP 0 337 813 A1 ist ein reibschweißbarer zweiteiliger Bolzen bekannt. Er besteht aus einem Schaft und einen Kragen. Aus der DE 20 2004 014071 U1 und der EP 3 259 093 A1 337 813 A1 sind einteilige reibschweißbare Bolzen bekannt.

Der Erfindung liegt die Aufgabe zugrunde, ein Verbindungselement bereitzustellen, das die Nachteile des Standes der Technik vermeidet. Es soll prozesssicher und automatisierbar mit dem Bauteil verbindbar sein, ohne dass das Bauteil eine Bohrung benötigt. Darüber hinaus soll es nicht nur kostengünstig sein, sondern auch flexibel an verschiedene Aufgabenstellungen/Befestigungsaufgaben adaptierbar sein.

Diese Aufgabe wird erfindungsgemäß gelöst durch ein Verbindungselement, insbesondere einen thermischen Stoffschlussdom, zum Befestigen an der Oberfläche eines Bauteils durch Reibschweißen umfassend ein Grundteil und ein Funktionsteil, wobei das Grundteil eine Oberseite und eine der Oberseite gegenüberliegende Unterseite mit einem ringförmigen Wulst aufweist, wobei das Grundteil eine die Oberseite und die Unterseite verbindende Öffnung aufweist, und wobei das Funktionsteil einen Schaft und an einem ersten Ende des Schafts einen Kopf aufweist, dessen Durchmesser oder Erstreckung quer zu einer Längsachse des Schafts größer als ein Durchmesser der Öffnung im Grundteil ist.

Das erfindungsgemäße Verbindungselement ist also zweiteilig. Es umfasst ein Grundteil, das an seiner Unterseite einen Wulst aufweist. Der Wulst "liefert" die Schweißzugabe beim Reibschweißen. Außerdem können durch eine entsprechende Gestaltung (vor allem Durchmesser, Breite, Höhe und Querschnittsform) der Reibschweißvorgang und die Festigkeit der Reibschweißverbindung einfach und flexibel an das Verbund-Werkstoff-Bauteil und die Befestigungsaufgabe angepasst werden.

Des Weiteren umfasst das erfindungsgemäße Verbindungselement ein Funktionsteil, das mit seinem Schaft von unten durch die Öffnung im Grundteil gesteckt wird, bis der Kopf des Funktionsteils an der Unterseite des Grundteils anliegt. Dann können Zugkräfte zwischen Funktionsteil und Grundteil übertragen werden. Sobald das Grundteil mit seinem Wulst an einem Bauteil durch Reibschweißen stoffschlüssig befestigt wurde, ist das Funktionsteil mittelbar aber dennoch fest mit dem Bauteil verbunden. Falls gewünscht, kann auch eine drehfeste formschlüssige Verbindung zwischen Funktionsteil und Grundteil ohne Weiteres hergestellt werden.

Durch die zweiteilige Bauweise ist es möglich, verschiedene Funktionsteile mit baugleichen Grundteilen zu kombinieren, so dass mit Hilfe des Funktionsteils beispielsweise eine Schnappverbindung, eine Schraubverbindung mittels Innengewinde oder Außengewinde herzustellen, ohne irgendeine Änderung am Grundteil und dem erfindungsgemäßen Fügevorgang. Beispielsweise können an einem Bauteil ein Befestigungselement mit einer Schnappverbindung und ein Befestigungselement mit einem Innengewinde mit der gleichen Vorrichtung zum Reibschweißen ohne Änderungen an den Prozessparametern befestigt werden, indem das baugleiche Grundteile mit verschiedenen Funktionsteilen kombiniert und der Vorrichtung zum Reibschweißen zugeführt werden. Das ist für die prozesssichere Serienfertigung von leistungsfähigen Leichtbauteilen ein erheblicher Vorteil.

Das erfindungsgemäße Verbindungselement ist sehr kostengünstig, da die Werkstoffe beider Bauteile (Grundteil und Funktionsteil) der jeweiligen Aufgabe entsprechend optimiert werden können. Das Grundteil ist, in vielen Fällen aus einem thermoplastischen Kunststoff. Bevorzugt aus einem faserverstärkten thermoplastischen Kunststoff, wie beispielsweise PA 66 35 GF. Selbstverständlich können auch andere (thermoplastische) Kunststoffe - mit und ohne Faserverstärkung - eingesetzt werden. Besonders geeignet sind: Polyphenylensulfid (PPS), Poyamid 6 (PA 6) und Polypropylen mit 30 % Glasfaser (PP GF30).

Das erfindungsgemäße Verbindungselement kann jedoch auch aus einem schweißbaren metallischen Werkstoff hergestellt werden.

Dann kann das Verbindungselement mit einem metallischen Bauteil durch Reibschweißen verbunden werden. Dabei müssen das Bauteil und das Grundteil miteinander verschweißbar sein. Da das Funktionsteil lediglich formschlüssig und nicht stoffschlüssig mit dem Verbindungsteil verbunden ist, bestehen bezüglich des Materials des Funktionsteils keine Restriktionen.

Diese nicht abschließenden Beispiele zeigen die große Flexibilität und Anpassbarkeit des erfindungsgemäßen Verbindungselements an verschiedenste Anforderungsprofile.

Erfindungsgemäße ist vorgesehen, dass an der Oberseite und/oder der Außenkontur des Grundteils mindestens ein Formschlusselement ausgebildet ist, und dass das mindestens eine Formschlusselement zum Übertragen des beim Reibschweißen erforderlichen Drehmoments von einem Werkzeug zum Fügen auf das Grundteil ausgebildet ist.

Das oder die Formschlusselemente können beispielsweise eine oder mehrere bevorzugte kreisrunde Vertiefungen (Sacklöcher) in der Oberseite des Grundteils umfassen. Es ist auch möglich, die Formschlusselemente als Längsnuten oder Vertiefungen an der Außenkontur des Grundteils auszubilden. Selbstverständlich ist es auch möglich, das Grundteil mit einer nicht rotationssymmetrischen Geometrieaußenkontur, wie beispielsweise einem Polygon (Dreieck, Viereck, Fünfeck, Sechseck, ...) oder als Gleichdick auszubilden, so dass das zum Reibschweißen erforderliche Drehmoment über die Außenkontur in das Grundteil eingeleitet werden kann. Dadurch ergeben sich glattflächige Verbindungselemente.

Durch die Vielzahl möglicher Formschlusselemente ist das Design des Grundteils kaum Restriktionen unterworfen. Vielmehr können auch gestalterische Belange berücksichtigt werden und ein ansprechendes Design erreicht werden.

Beispielsweise in Anwendungen wo großer Wert auf Sauberkeit gelegt wird, ist eine glattflächige Außenkontur des Grundteils, ohne Vertiefungen oder Nuten möglicherweise besonders vorteilhaft. Dann kann die Außenkontur des Grundteils ein Polygon oder Gleichdick sein. Sacklöcher und Nuten an der Außenkontur können dann entfallen.

Um eine gute und belastbare Übertragung von Zugkräften von dem Schaft des Funktionsteils auf das Grundteil zu gewährleisten, ist der Kopf des Funktionsteils als Platte, bevorzugt als nicht-rotationssymmetrische Platte ausgebildet. Wenn die Platte nicht rotationssymmetrisch ist und auf der Unterseite des Grundteils eine entsprechende Vertiefung ausgebildet ist, können auch Drehmomente zwischen Grundteil und Funktionsteil übertragen werden. Das ist häufig dann vorteilhaft, wenn das Funktionsteil ein Außen- oder Innengewinde an seinem Schaft aufweist und eine Schraube beziehungsweise Mutter auf das Funktionsteil aufgedreht werden soll. Die Abmessungen des Kopfs werden entsprechend dem Lastkollektiv (Axialkräfte, Drehmomente) denen das Verbindungselement ausgesetzt ist, bestimmt. erwartenden Axialkräften gewählt werden.

Das Funktionsteil kann optional einen mit der Öffnung im Grundteil des Gehäuses zusammenwirkenden Zentrierabschnitt aufweisen. Dann wird das Funktionsteil über den Zentrierabschnitt in der Öffnung des Grundteils zentriert. Es ist auch möglich hier einen Schiebesitz oder eine leichte Presspassung vorzusehen, so dass, wenn das Funktionsteil mit seinem Zentrierabschnitt in die Öffnung des Grundteils einpresst wurde, die beiden Bauteile des erfindungsgemäßen Verbindungselements miteinander verbunden sind. Das erleichtert die Handhabung (manuell oder automatisiert) des erfindungsgemäßen Verbindungselements vor dem Verschweißen des Grundteils mit dem Bauteil.

Entsprechend den Anforderungen des Anwendungsfalls kann der Schaft des Funktionsteils Teil einer Schnappverbindung sein. Er kann jedoch auch ein Außengewinde oder ein Innengewinde aufweisen. Auch sind Querbohrungen zur Aufnahme eines Splints oder eine Nut zur Aufnahme eines Sicherungsrings (Seeger-Ring) ausgebildet sein. Es können auch Widerhaken an dem Schaft angeordnet sein, mit deren Hilfe weiche Materialien an dem Schaft fixiert werden. Der Schaft kann so gestaltet werden, dass er optimal mit einem oder mehreren Bauteilen verbindbar ist. Der Gestaltung des Schafts sind keine Grenzen gesetzt.

Ein Werkzeug zum Fügen des Verbindungselements mit einem Bauteilweist einen mindestens bereichsweise hohlen oder rohrförmigen Werkzeugkörper auf, dessen erstes Ende so ausgebildet ist, dass es eine drehfeste formschlüssige Verbindung mit dem Grundteil und/oder dem Zentrierabschnitt des Funktionsteils eingeht, wenn es auf dem Verbindungsteil aufgesetzt ist. Der Hohlraum/die Mittenbohrung im Werkzeugkörper dient dazu, den Schaft des Funktionsteils aufzunehmen.

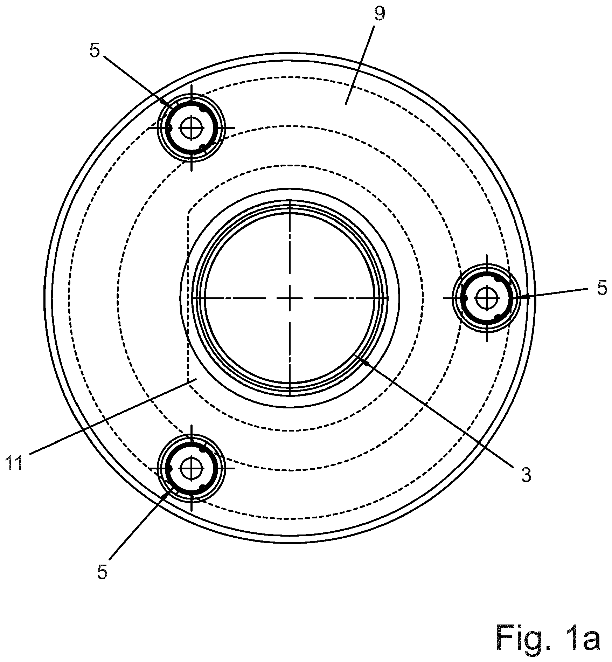

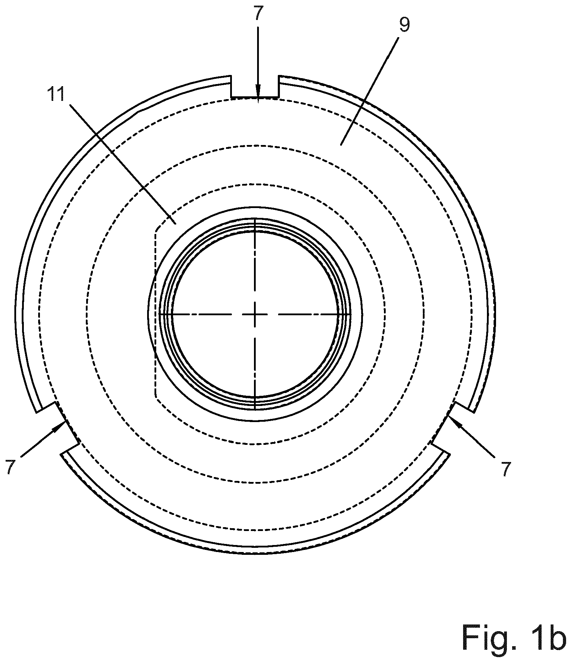

Das erste Ende des Werkzeugs ist komplementär zu der Oberseite beziehungsweise der Außenkontur des Grundteils ausgestaltet. Wenn, wie beispielsweise in der Figur 1, dargestellt, in der Oberseite des Grundteils Vertiefungen ausgebildet sind, dann weist das erste Ende des Werkzeugs drei Zapfen auf, die in die Vertiefungen einfahren, wenn das Werkzeug auf das Grundteil aufgesetzt wird. Es sind eine Vielzahl anderer Ausgestaltungen möglich. Wichtig ist jedoch, dass durch die komplementäre Gestaltung des ersten Endes des Werkzeugs und des Grundteils das zum Reibschweißen erforderliche Drehmoment während des Reibschweißvorgangs von dem Werkzeug auf das Grundteil übertragen wird und damit das erfindungsgemäße Verbindungselement mit dem Bauteil verbunden wird.

Weitere Vorteile und vorteilhafte Ausgestaltungen der Erfindung sind der nachfolgenden Zeichnung, deren Beschreibung und den Patentansprüchen entnehmenbar. Alle in der Zeichnung, deren Beschreibung und den Patentansprüchen offenbarten Merkmale können sowohl einzeln als auch in beliebiger Kombination miteinander erfindungswesentlich sein.

### Zeichnung

Es zeigen:
- Figur 1: eine Ansicht von oben auf ein Grundteil eines erfindungsgemäßen Verbindungselements,
- Figur 2: eine Seitenansicht des Grundteils,
- Figur 3: einen Schnitt durch das erfindungsgemäße Grundteil,
- Figur 4: eine Ansicht von unten eines erfindungsgemäßen Grundteils,
- Figuren 5 bis 7: verschiedene Darstellungen erfindungsgemäßer Funktionsteile,
- Figur 8: das erfindungsgemäße zweiteilige Verbindungselement mit Grundteil und Funktionsteil teilweise geschnitten;
- Figur 9: ein mit einem Bauteil verschweißtes zweiteilige Verbindungselement; und
- Figur 10: ein Ausführungsbeispiel eines Werkzeugs zum Fügen des Verbindungselements mit einem Bauteil.

### Beschreibung der Ausführungsbeispiele

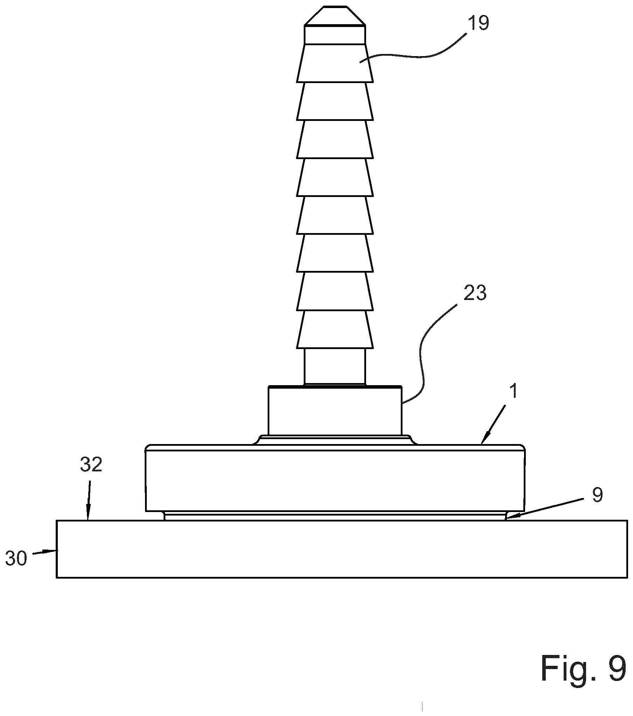

In der Figur 1a ist eine Ansicht von oben auf das Grundteil 1 eines erfindungsgemäßen Verbindungselements dargestellt. Bei diesem Ausführungsbeispiel ist das Grundteil 1 als im Wesentlichen kreisförmige Scheibe oder Platte ausgebildet. Es weist in der Mitte eine Öffnung 3 auf. An der Oberseite des Grundteils 1 sind drei über den Umfang verteilte kreisförmige Vertiefungen 5 angeordnet. Sie sind Sacklöcher, die dazu dienen, mit entsprechenden komplementär gestalteten und angeordneten Zapfen eines Werkzeugs (siehe Figur 9) das zum Reibschweißen erforderliche Drehmoment von dem Werkzeug auf das Grundteil 1 zu übertragen.

In der Figur 1b ist eine weitere Alternative der Drehmomentübertragung zwischen einem Werkzeug zum Reibschweißen und dem Grundteil 1 zeichnerisch dargestellt: An der kreisförmigen Außenkontur sind drei Längsnuten oder Vertiefungen 7 angeordnet. Die Vertiefungen 7 können mit entsprechenden Rippen oder Zapfen an einem Werkzeug zum Reibschweißen einen Formschluss bilden und dadurch das erforderliche Drehmoment von dem Werkzeug auf das Grundteil 1 übertragen. Die Vertiefungen 5 gemäß dem ersten Ausführungsbeispiel können dann entfallen.

Es ist nicht notwendig, sowohl die Vertiefungen 5 als auch die Nuten 7 an einem Grundteil auszubilden. In der Regel ist eines der Elemente 5 oder 7 ausreichend. Das Grundteil 1 kann sowohl über die Längsnuten 7 als auch über die Vertiefungen 5 relativ zu dem Werkzeug zentriert werden. Es ist jedoch auch möglich, die Zentrierung des Grundteils 1 relativ zu dem Werkzeug beispielswiese über die Außenkontur des Grundteils 1 und eine komplementäre Gestaltung des Werkzeugs zu erreichen.

Es ist auch möglich, das Grundteil 1 nicht kreisrund auszubilden, sondern beispielsweise als Sechseck oder als Gleichdick (Polygon) auszubilden. Dann ist die Außenkontur nicht rotationssymmetrisch und es ist möglich mit Hilfe eines komplementär geformten Werkzeugs das Drehmoment vom Werkzeug auf das Grundteil zu übertragen. In diesem Fall sind dann weder Vertiefungen 5, noch Längsnuten 7 erforderlich. Dadurch ergibt sich eine besonders glatte und wenig verschmutzungsanfällige Außenkontur des Grundteils 1. Diese Ausführungsform ist nicht dargestellt.

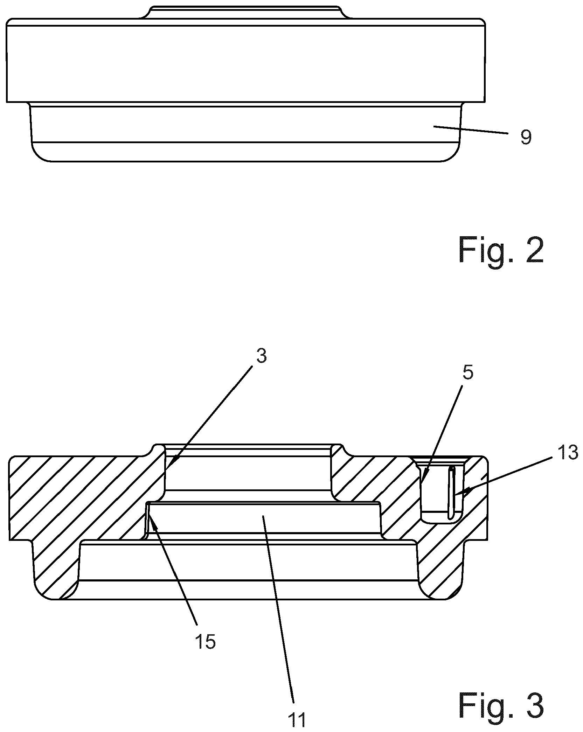

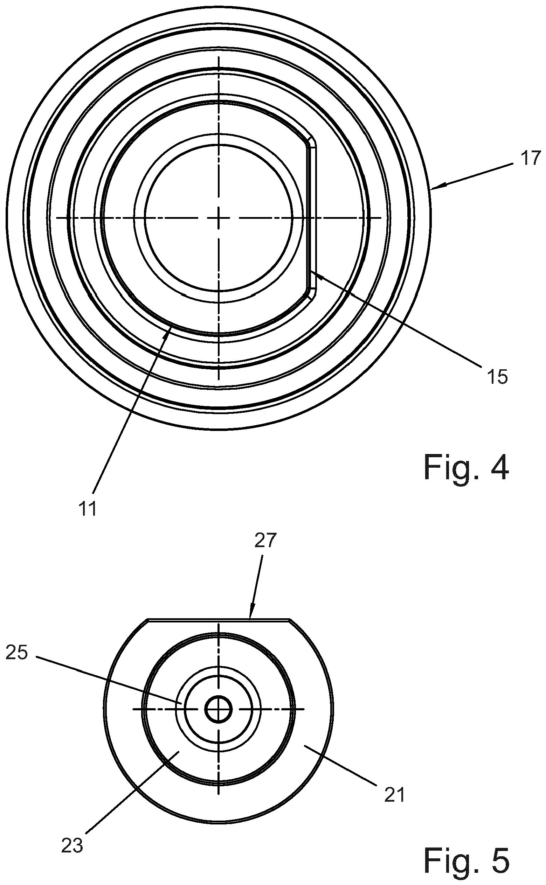

Die unterbrochenen kreisförmigen Linien in den Figuren 1a und 1b zeigen einen Wulst 9 sowie eine Vertiefung 11 an der Unterseite des Grundteils 1. Form und Funktion des Wulstes 9 und der Ausnehmung 11 werden nachfolgend im Zusammenhang mit den Figuren 3 und 4 näher erläutert.

In der Figur 2 ist eine Seitenansicht des erfindungsgemäßen Grundteils 1 dargestellt. Aus dieser Seitenansicht wird der scheibenförmige Grundaufbau des Grundteils 1 deutlich. An der Unterseite des Grundteils 1 (unten in der Figur 2) ist der Wulst 9 gut zu erkennen. Der Wulst 9 dient als Schweiß- oder Materialzugabe für das Reibschweißen. Wenn nämlich das Grundteil 1 mit einem nicht dargestellten Bauteil durch Reibschweißen verbunden werden soll, dann wird das Grundteil 1 in Rotation versetzt und gleichzeitig mit dem Wulst 9 gegen das Bauteil gedrückt. Durch die dabei entstehende Reibungswärme wird das Material des Wulstes 9 zumindest teilweise weich und plastisch. Sobald dieser Prozess weit genug fortgeschritten ist, wird die Rotation beendet und das Grundteil mit seinem verflüssigten/plastifizierten Wulst 9 gegen das Bauteil gepresst, bis das Material des Wulstes 9 wieder fest geworden ist.

In der Figur 3 ist das Grundteil 1 geschnitten dargestellt. In dieser Darstellung sind die zentrale Öffnung 3 und eine der drei Vertiefungen 5 gut zu erkennen. In der Vertiefung 5 ist eine kleine Rippe 13 ausgebildet. Sie dient dazu, einen Presssitz mit einem Zapfen (nicht dargestellt) eines Werkzeugs zum Fügen herzustellen. Dann fallen das erfindungsgemäße Verbindungselement (Grundteil 1) und das nicht dargestellte Funktionsteil nicht mehr aus dem Werkzeug heraus, bis es mit dem Bauteil gefügt wurde.

In der Figur 3 ist die Ausnehmung 11 an der Unterseite des Grundteils 1 gut zu erkennen. Die Ausnehmung 11 hat eine, wie sich besonders anschaulich aus der Figur 4 ergibt, eine kreisförmige Grundform und weist an der rechten Seite eine Abflachung 15 auf; sie ist also nicht rotationssymmetrisch. Diese Abflachung 15 dient dazu, eine drehfeste formschlüssige Verbindung mit dem Kopf eines nicht dargestellten Funktionsteils herbeizuführen.

Die Abmessungen des Wulstes 9, insbesondere dessen Höhe, Breite, Durchmesser und Querschnitt, bestimmen die zur Verfügung stehenden Schweißzugabe und Parameter des Reibschweißvorgangs. Die Abmessungen des Wulstes 9 können entsprechend den Anforderungen des Anwendungsfalls angepasst werden. Auch hier zeigt sich die gute Adaptierbarkeit des erfindungsgemäßen Verbindungselements an verschiedene Anwendungsfälle.

In dem dargestellten Ausführungsbeispiel ist der Wulst 9 relativ groß, so dass sehr viel Material zum Reibschweißen zur Verfügung steht.

In der Figur 4 ist das Grundteil 1 in einer Ansicht von unten dargestellt. Aus dieser Ansicht ergibt sich besonders gut die Form der Ausnehmung 11 mit der Abflachung 15. Die Außenkontur des Grundteils 1 ist in der Figur 4 mit 17 bezeichnet.

In den Figuren 5 bis 7 sind verschiedene Ansichten von zwei Ausführungsbeispielen erfindungsgemäßer Funktionsteile 19 dargestellt. Die Figur 5 zeigt eine Ansicht von oben auf ein erstes Ausführungsbeispiel eines Funktionsteil 19. Wie sich aus den Figuren 5 bis 7 ergibt, umfasst das Funktionsteil 19 bei allen Ausführungsbeispielen einen Kopf 21, einen Zentrierabschnitt 23 und einen Schaft 25.

Der Kopf 21 ist, wie sich aus der Ansicht von oben (Figur 5) besonders gut erkennen lässt, kreisförmig ausgebildet und weist eine Abflachung 27 auf. Der Kopf 21 und die Abflachung 27 sind komplementär zu der Ausnehmung 11 mit der Abflachung 15 auf der Unterseite des Grundteils 1 ausgebildet, so dass eine formschlüssige drehfeste Verbindung zwischen dem Kopf 21 des Funktionsteils 19 und dem Grundteil 1 entsteht, wenn der Schaft 25 von unten durch die Öffnung 3 des Grundteils 1 geschoben wird, bis der Kopf 21 an dem Grundteil 1 anliegt.

Bei den dargestellten Ausführungsbeispielen umfasst das Funktionsteil 19 einen (optionalen) Zentrierabschnitt 23, der in seinen Abmessungen auf den Durchmesser der Öffnung 3 des Grundteils 1 abgestimmt ist. Wenn das Funktionsteil mit dem Schaft 25 durch die Öffnung in das Grundteil geschoben wird, entsteht bevorzugt ein leichter Presssitz zwischen dem Zentrierabschnitt 23 und der Öffnung 3 des Grundteils 1. Er verhindert, dass das Funktionsteil 19 unbeabsichtigter Weise wieder aus dem Grundteil 1 herausfällt.

Durch die Abflachungen 15 beziehungsweise 27 in der Ausnehmung 11 beziehungsweise dem Kopf 21 ist eine sichere und leistungsfähige Übertragung von Drehmomenten zwischen Funktionsteil 19 und Grundteil 1 gewährleistet. Die Drehmomentübertragung ist nicht auf die dargestellten Ausführungsbeispiele beschränkt. Über den Kopf 21 können auch große axiale Kräfte zwischen dem Funktionsteil 19 und dem Grundteil 1 übertragen werden.

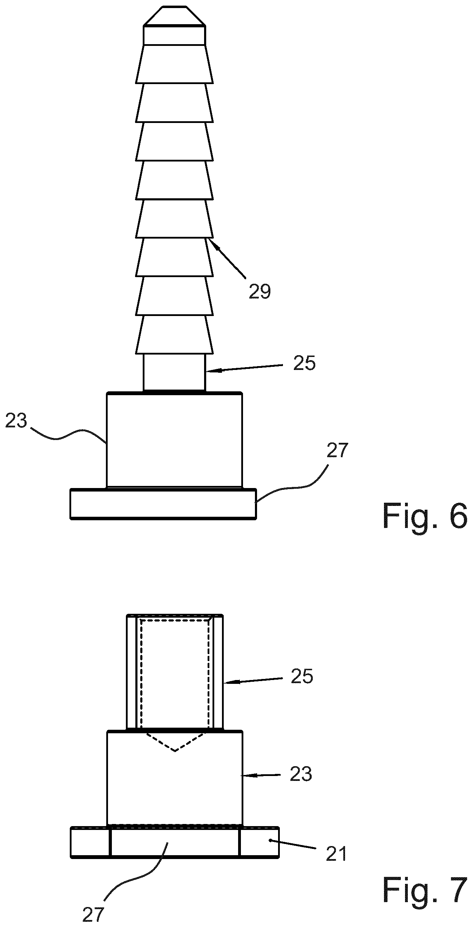

In der Figur 6 ist der Schaft 25 des Funktionsteils 19 als Teil einer Schnappverbindung ausgebildet. Er umfasst mehrere Hinterschnitte 29, die zusammen mit entsprechenden Rasthaken oder Schnapphaken eines nicht dargestellten Gegenstücks die erwähnte Schnappverbindung bilden.

In der Figur 7 ist beispielhaft ein alternatives Funktionsteil 19 ausgebildet. Dabei weist der Schaft 25 ein Innengewinde auf. Zentrierabschnitt 23 und Kopf 21 sind baugleich wie bei dem Ausführungsbeispiel gemäß Figur 6 ausgeführt. Dies hat den Vorteil, dass in das gleiche Grundteil 1 alternativ die Funktionsteile 19 gemäß der Figuren 6 und 7 eingesetzt werden können. An dem Reibschweißprozess zum Verbinden des Grundteils 1 mit einem Bauteil ändert sich dadurch nichts. Es ist durch die zweiteilige Bauweise auch möglich, eine Vielzahl weiterer (nicht dargestellter) Funktionsteile 19 mit dem gleichen Grundteil zu kombinieren. Der Gestaltungsfreiheit bei den Funktionsteilen 19 sind kaum Grenzen gesetzt. Auch ist es möglich, das Funktionsteil 19 aus einem anderen Material herzustellen als das Grundteil 1.

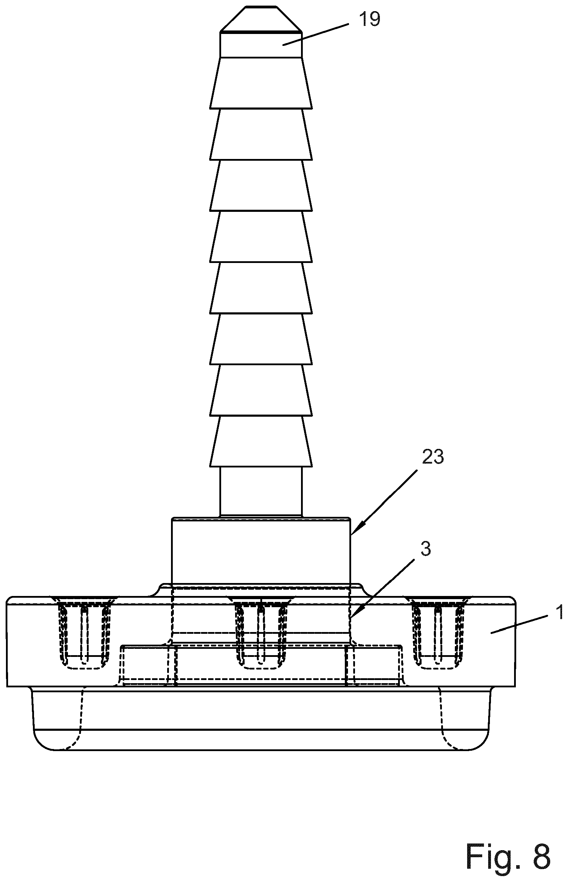

In der Figur 8 ist eine Zusammenbauzeichnung des erfindungsgemäßen Verbindungselements dargestellt. Das Verbindungselement 31 ist zweiteilig ausgeführt. Es umfasst, wie bereits erwähnt, ein Grundteil 1 und ein Funktionsteil 19. Durch einen leichten Presssitz zwischen der Öffnung 3 und dem Zentrierabschnitt 23 kann erreicht werden, dass das Funktionsteil 19 nicht aus dem Grundteil 1 herausfällt.

Das erfindungsgemäße zweiteilige Verbindungselement kann nun auf ein Werkzeug zum Fügen aufgesetzt werden und dann mit einem Bauteil durch Reibschweißen in der oben beschriebenen Art und Weise verbunden werden.

In der Figur 9 ist das Verbindungselement gemäß Figur 8 dargestellt, das mit einem Verbund-Werkstoff-Bauteil 30 durch Reibschweißen verbunden ist. Der Wulst 9 ist deutlich flacher und breiter. Das ist eine Folge der beim Reibschweißen stattfindenden Plastifizierung und Verformung des Wulsts 9. Die Fügefläche zwischen dem Bauteil 30 und dem Grundteil 1 des Verbindungselements ist sehr viel größer als die Querschnittsfläche des Wulsts 9 vor dem Reibschweißen. Dadurch ist die Belastbarkeit der Verbindung sehr groß. Die Fügefläche kann, wie bereits erwähnt, durch die Abmessungen und Gestaltung des Wulsts 9 in sehr weiten Grenzen an die Anforderungen des Einzelfalls angepasst werden.

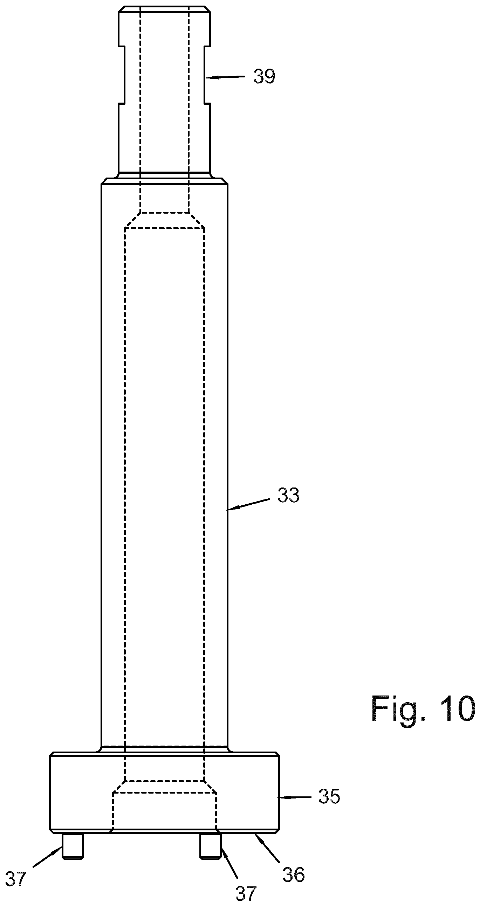

In der Figur 10 ist ein Ausführungsbeispiel eines Werkzeugs 31 zum Fügen dargestellt. Es umfasst einen rohrförmigen Grundkörper 33, der den Schaft 25 des Verbindungselements aufnimmt.

Ein erstes Ende 35 des Werkzeugs 31 ist als Anlagefläche 36 für das Grundteil 1 ausgebildet. An der Stirnseite des Werkzeugs 31 sind drei Zapfen 37 eingepresst von denen zwei sichtbar sind. Diese Zapfen 37 fahren in die Vertiefungen 5 des Grundteils 1 gemäß Figur 1a ein und bewirken dadurch eine formschlüssige Verbindung, die geeignet ist, um das zum Reibschweißen erforderliche Drehmoment von dem Werkzeug auf das Verbindungselement zu übertragen.

An einem dem ersten Ende 35 gegenüberliegenden Ende ist ein Antriebselement 39 vorhanden. Das Antriebselement 39 ist bei dem dargestellten Ausführungsbeispiel ein zylindrischer Zapfen mit zwei parallelen Flächen für die Verspannung in der Werkzeugaufnahme. Mit ihm wird das Werkzeug 31 in eine Vorrichtung zum Reibschweißen eingespannt.

### Bezugszeichenliste

- 1: Grundteil
- 3: Öffnung
- 5: Vertiefung
- 7: Längsnut
- 9: Wulst
- 11: Vertiefung/Ausnehmung
- 13: Rippe
- 15: Abflachung
- 17: Außenkontur
- 19: Funktionsteil
- 21: Kopf
- 23: Zentrierabschnitt
- 25: Schaft
- 27: Abflachung
- 29: Hinterschnitt
- 30: Bauteil
- 31: Werkzeug
- 33: Rohrförmiger Grundkörper
- 35: erstes Ende
- 37: Zapfen
- 39: Antriebselement
- 41: Innengewinde

## Patentansprüche

1. Verbindungselement, insbesondere thermischer Stoffschlussdom, zum Befestigen an der Oberfläche eines Bauteils (30) durch Reibschweißen umfassend ein Grundteil (1) und ein Funktionsteil (19), wobei das Grundteil (1) eine Oberseite und eine der Oberseite gegenüberliegende Unterseite mit einem ringförmigen Wulst (9) aufweist, wobei das Grundteil (1) eine die Oberseite und die Unterseite verbindende Öffnung (3) aufweist, und wobei das Funktionsteil (19) einen Schaft (25) und an einem ersten Ende des Schafts (25) einen Kopf (21) aufweist, dessen Durchmesser oder Erstreckung quer zu einer Längsachse des Schafts (25) größer als ein Durchmesser der Öffnung (3) ist.

2. Verbindungselement nach Anspruch 1, **dadurch gekennzeichnet, dass** das Grundteil (1) an der Oberseite und/oder der Außenkontur (17) mindestens ein Formschlusselement aufweist, und dass das mindestens eine Formschlusselement zum Übertragen des beim Reibschweißen erforderlichen Drehmoments von einem Werkzeug (31) zum Fügen auf das Grundteil (1) ausgebildet ist.

3. Verbindungselement nach Anspruch 2, **dadurch gekennzeichnet, dass** das Formschlusselement eine oder mehrere, bevorzugt kreisrunde Vertiefungen (5) in der Oberseite des Grundteils (1) umfasst.

4. Verbindungselement nach Anspruch 2, **dadurch gekennzeichnet, dass** das Formschlusselement eine, zwei, drei oder mehr Längsnuten (7) oder -vertiefungen an der Außenkontur (17) des Grundteils (1) umfasst.

5. Verbindungselement nach Anspruch 2, **dadurch gekennzeichnet, dass** das eine Formschlusselement eine nicht rotationssymmetrische Außenkontur (17), insbesondere in Form eines regelmäßigen oder unregelmäßigen Polygons oder Gleichdicks umfasst.

6. Verbindungselement nach einem der vorherigen Ansprüche, **dadurch gekennzeichnet, dass** der Kopf (21) des Funktionsteils (10) als Platte, bevorzugt als nicht rotationssymmetrische Platte ausgebildet ist.

7. Verbindungselement nach einem der vorherigen Ansprüche, **dadurch gekennzeichnet, dass** die Unterseite des Grundteils (1) komplementär zu dem Kopf (21) des Funktionsteils (19) ausgebildet ist, so dass das Funktionsteil (19) und das Grundteil (1) drehfest und formschlüssig miteinander verbunden sind.

8. Verbindungselement nach einem der vorherigen Ansprüche, **dadurch gekennzeichnet, dass** das Funktionsteil (19) einen mit der Öffnung (3) im Grundteil (1) zusammenwirkenden Zentrierabschnitt (23) aufweist.

9. Verbindungselement nach einem der vorherigen Ansprüche, **dadurch gekennzeichnet, dass** die Öffnung (3) des Grundteils (1) und der Zentrierabschnitt (23) des Funktionsteils (19) drehfest und formschlüssig miteinander verbunden sind.

10. Verbindungselement nach einem der vorherigen Ansprüche, **dadurch gekennzeichnet, dass** der Schaft (25) des Funktionsteils (19) als Teil einer Schnappverbindung mit einem oder mehreren Hinterschnitten (29) ausgebildet ist.

11. Verbindungselement nach einem Ansprüche 1 bis 9, **dadurch gekennzeichnet, dass** an dem Schaft (25) des Funktionsteils (1) ein Außen-Gewinde und/oder oder ein Innengewinde (41) ausgebildet ist.

12. Verbindungselement (10) nach einem der vorherigen Ansprüche, **dadurch gekennzeichnet, dass** das Grundteil (1) aus einem schweißbaren Material, insbesondere einem thermoplastischen Kunststoff oder Metall, hergestellt ist.

## Claims

1. Connection element, in particular a thermal material bonding dome, for fastening to the surface of a component (30) by friction welding, comprising a main part (1) and a functional part (19), wherein the main part (1) has an upper side and a lower side which is opposite the upper side and has an annular bead (9), wherein the main part (1) has an opening (3) connecting the upper side and the lower side, and wherein the functional part (19) has a shank (25) and, at a first end of the shank (25), a head (21) of which the diameter or extension transversely to a longitudinal axis of the shank (25) is greater than a diameter of the opening (3).

2. Connection element according to claim 1, **characterized in that** the main part (1) has at least one interlocking element on the upper side and/or the outer contour (17), **and in that** the at least one interlocking element is designed to transmit the torque required during friction welding from a tool (31) for joining to the main part (1).

3. Connection element according to claim 2, **characterized in that** the interlocking element comprises one or more, preferably circular, depressions (5) in the upper side of the main part (1).

4. Connection element according to claim 2, **characterized in that** the interlocking element comprises one, two, three or more longitudinal grooves (7) or depressions on the outer contour (17) of the main part (1).

5. Connection element according to claim 2, **characterized in that** the one interlocking element comprises a non-rotationally symmetrical outer contour (17), in particular in the form of a regular or irregular polygon or a body having a constant width.

6. Connection element according to any of the preceding claims,
**characterized in that** the head (21) of the functional part (10) is designed as a plate, preferably as a non-rotationally symmetrical plate.

7. Connection element according to any of the preceding claims,
**characterized in that** the underside of the main part (1) is complementary to the head (21) of the functional part (19), such that the functional part (19) and the main part (1) are connected to one another in a rotationally fixed and interlocking manner.

8. Connection element according to any of the preceding claims,
**characterized in that** the functional part (19) has a centering portion (23) which interacts with the opening (3) in the main part (1).

9. Connection element according to any of the preceding claims,
**characterized in that** the opening (3) of the main part (1) and the centering portion (23) of the functional part (19) are connected to one another in a rotationally fixed and interlocking manner.

10. Connection element according to any of the preceding claims,
**characterized in that** the shank (25) of the functional part (19) is designed as part of a snap connection with one or more undercuts (29).

11. Connection element according to any of claims 1 to 9, **characterized in that** an external thread and/or an internal thread (41) is formed on the shank (25) of the functional part (1).

12. Connection element (10) according to any of the preceding claims, **characterized in that** the main part (1) is made of a weldable material, in particular a thermoplastic material or metal.

## Revendications

1. Elément de liaison, en particulier embout à liaison de matière par voie thermique, à fixer sur la surface d'une pièce (30) par soudage par friction, comprenant une partie de base (1) et une partie fonctionnelle (19), dans lequel la partie de base (1) présente une face supérieure et une face inférieure opposée à la face supérieure avec un bourrelet annulaire (9), dans lequel la partie de base (1) présente une ouverture (3) reliant la face supérieure et la face inférieure, et dans lequel la partie fonctionnelle (19) présente une tige (25) et, à une première extrémité de la tige (25), une tête (21) dont le diamètre ou l'étendue transversalement à un axe longitudinal de la tige (25) est supérieur(e) à un diamètre de l'ouverture (3).

2. Elément de liaison selon la revendication 1, **caractérisé en ce que** la partie de base (1) présente au moins un élément à complémentarité de forme sur la face supérieure et/ou le contour extérieur (17), et **en ce que** le au moins un élément à complémentarité de forme est réalisé pour transmettre le couple nécessaire lors du soudage par friction à partir d'un outil (31) pour l'assemblage sur la partie de base (1).

3. Elément de liaison selon la revendication 2, **caractérisé en ce que** l'élément à complémentarité de forme comprend un ou plusieurs évidements (5), de préférence circulaires, dans la face supérieure de la partie de base (1).

4. Elément de liaison selon la revendication 2, **caractérisé en ce que** l'élément à complémentarité de forme comprend un, deux, trois rainures (7) ou évidements longitudinaux ou plus sur le contour extérieur (17) de la partie de base (1).

5. Elément de liaison selon la revendication 2, **caractérisé en ce que** l'un des éléments à complémentarité de forme comprend un contour extérieur (17) non à symétrie de rotation, en particulier sous forme d'un polygone régulier ou irrégulier ou orbiforme.

6. Elément de liaison selon l'une quelconque des revendications précédentes, **caractérisé en ce que** la tête (21) de la partie fonctionnelle (10) est réalisée sous forme de plaque, de préférence sous forme de plaque non à symétrie de rotation.

7. Elément de liaison selon l'une quelconque des revendications précédentes, **caractérisé en ce que** la face inférieure de la partie de base (1) est réalisée de manière complémentaire de la tête (21) de la partie fonctionnelle (19), de sorte que la partie fonctionnelle (19) et la partie de base (1) sont reliées entre elles de manière solidaire en rotation et par complémentarité de forme.

8. Elément de liaison selon l'une quelconque des revendications précédentes, **caractérisé en ce que** la partie fonctionnelle (19) présente une section de centrage (23) coopérant avec l'ouverture (3) dans la partie de base (1).

9. Elément de liaison selon l'une quelconque des revendications précédentes, **caractérisé en ce que** l'ouverture (3) de la partie de base (1) et la section de centrage (23) de la partie fonctionnelle (19) sont reliées entre elles de manière solidaire en rotation et par complémentarité de forme.

10. Elément de liaison selon l'une quelconque des revendications précédentes, **caractérisé en ce que** la tige (25) de la partie fonctionnelle (19) est réalisée comme une partie d'une liaison par encliquetage avec un ou plusieurs dégagements (29).

11. Elément de liaison selon l'une quelconque des revendications 1 à 9, **caractérisé en ce qu'**un filetage extérieur et/ou un filetage intérieur (41) est réalisé sur la tige (25) de la partie fonctionnelle (1).

12. Elément de liaison (10) selon l'une quelconque des revendications précédentes, **caractérisé en ce que** la partie de base (1) est fabriquée à partir d'un matériau soudable, en particulier une matière thermoplastique ou un métal.
